# EUROPÄISCHE PATENTSCHRIFT

(11) **EP 0 914 988 B1**
(45) Veröffentlichungstag und Bekanntmachung des Hinweises auf die Patenterteilung: **27.08.2003**
(21) Anmeldenummer: 98111784.9
(22) Anmeldetag: 26.06.1998
(51) Int. Cl.: B60R 1/06

(54) **Haltearm für einen Kraftfahrzeug-Aussenspiegel mit integriertem Schwenkgelenk**
Retaining arm for an exterior rear view mirror of a vehicle with integrated swivel joint
Bras de retenue d'un rétroviseur extérieur de véhicule avec articulation intégrée

(30) Priorität: 04.11.1997 DE 19748626
(43) Veröffentlichungstag der Anmeldung: 12.05.1999
(73) Patentinhaber: MEKRA Lang GmbH & Co. KG, D-90765 Fürth (DE)
(72) Erfinder: Lang, Heinrich, 91465 Ergersheim (DE); Popp, Albrecht, 91629 Weihenzell (DE)
(74) Vertreter: Hübner, Gerd, Dipl.-Phys.

(56) Entgegenhaltungen:
- DE-A- 3 436 418
- FR-A- 2 314 078
- GB-A- 2 041 857
- US-A- 3 107 077
- US-A- 3 339 876
- US-A- 3 384 334
- US-A- 3 637 186
- US-A- 3 730 474
- US-A- 4 623 115
- US-A- 5 432 640

## Beschreibung

Die Erfindung betrifft einen Haltearm für einen Kraftfahrzeug-Außenspiegel mit einem integrierten, in mindestens einer Stellung verrastbaren Schwenkgelenk.

Ein derartiger Spiegelarmmechanismus ist aus der EP 0 641 686 A2 bekannt. Bei dem dort gezeigten verrastbaren Schwenkgelenk kooperieren verschiedene Rastelemente miteinander, die in Eingriffsrichtung der Verrastung durch eine Schraubendruckfeder beaufschlagt sind. Den dort gezeigten Ausführungsformen ist gemeinsam, daß verschiedene axial und radial wirkende Keilflächen an ineinandersitzenden Ring- bzw. Ringsegment-Teilen in relativ komplexer Weise ineinandergreifen. Insoweit ist das bekannte Schwenkgelenk kompliziert aufgebaut und in seiner Montage aufwendig. Ferner kann bei dem bekannten Schwenkgelenk insbesondere bei einer Ausführungsform, bei der verschiedene, voneinander getrennte Ringsegmente zur Bildung von Rastkeilflächen verwendet werden, eine Verkeilung der Rastelemente zueinander auftreten. Damit würde das Schwenkgelenk blockiert werden und könnte seine Sicherheitsfunktion - nämlich das Einklappen beim Anschlagen des vom Haltearm getragenen Außenspiegels an ein Hindernis - nicht mehr erfüllen. Auch erschwert sich durch eine Blockierung oder zumindest eine durch das Zusammenwirken der verschiedenen internen Teile des Schwenkgelenkes hervorgerufene Schwergängigkeit das manuelle Einklappen des Spiegels, z. B. für das Passieren von engen Durchfahrten.

Aus der gattungsgemäßen US 4 623 115 A ist ein schwenkbarer Haltearm fiir einen Kraftfahrzeug-Außenspiegel bekannt, dessen Schwenkgelenk in unterschiedlichen Schwenkstellungen zueinander verrastbar ist. Dabei ist an dem schwenkbaren Schenkel des Haltearmes ein Rastelement an einer blattfederartigen Zunge aufgehängt, das in entsprechende Rastausnehmungen am anderen Haltearmschenkel eingreift. Die jeweilige Schwenkstellung der beiden Schenkel zueinander ist durch eine zusätzliche Stirnverzahnung zwischen den beiden schwenkbaren Elementen verstärkt, wodurch offensichtlich die Raststabilität der beiden Schenkel in einer bestimmten Stellung zueinander erhöht werden soll. Insoweit dürfte die eigentliche Verrastung in ihrer Stabilität verbesserungsbedürftig sein.

Zum Stand der Technik ist als allgemeiner Hintergrund ferner darauf hinzuweisen, daß bei Haltearmen mit verrastbarem Schwenkgelenk oftmals Gelenkkonstruktionen verwendet werden, bei denen die vom Schwenkgelenk abgehenden Armschenkel beim Aus- und Einrasten des Schwenkgelenkes relativ zueinander versetzt werden. Diese Versetzung wurde in der Vergangenheit durch die Elastizität der eine beträchtliche Länge aufweisenden Haltearme ausgeglichen.

Moderne, aktuelle Spiegelkonstruktionen weisen oftmals jedoch nur sehr kurze Haltearme auf, die sich direkt in horizontaler Richtung von der Karosserie zum Spiegelgehäuse erstrecken. Insbesondere bei diesen Konstruktionen ist der Spielraum für den Längenausgleich sehr beschränkt. Eine Lösung dieser Problematik bringt bereits die erwähnte EP 0 641 686 A2, dies allerdings mit den erwähnten Nachteilen.

Der Erfindung liegt die Aufgabe zugrunde, einen Haltearm mit verrastbarem Schwenkgelenk anzugeben, bei der die beiden Armschenkel nach wie vor ohne Verschiebung zueinander unter Ein- und Ausrasten des Schwenkgelenkes verstellbar sind, wobei jedoch der Schwenkoder Verrastmechanismus einfacher, damit montagefreundlicher und kompakter aufgebaut sowie in seiner Rastkraft deutlich verbessert wird.

Diese Aufgabe wird durch die im Kennzeichnungsteil des Patentanspruches 1 angegebenen Merkmale gelöst. Demnach geht der erfindungsgemäße Haltearm grundsätzlich vor einem zumindest im Bereich des Schwenkgelenks in dessen gestreckter Stellung durchgehenden Arm aus, wobei die Schwenkachse des zwischen den beiden Armschenkeln gebildeten Schwenkgelenks quer zur Längsrichtung der Armschenkel angeordnet ist. Das in Eingriffsrichtung mit dem Rastelement federbeaufschlagte Gegenrastelement ist am freien Ende einer blattfederartigen Tragstrebe aufgehängt, die mit ihrem festen Ende an diesem zugeordneten Armschenkel festgelegt ist

Die blattfederartige Tragstrebe sorgt zum einen für die Federbeaufschlagung des Gegenrastelementes und zum anderen für den erforderlichen Ausrückweg des Gegenrastelementes bei einer Verschwenkung eines Armschenkels gegenüber dem anderen Armschenkel. Schließlich sorgt die Tragstrebe auch für die drehfeste Halterung des Gegenrastelementes, so daß entsprechende Keil- und Nutenverbindungen des Gegenrastelementes mit dem ihm zugeordneten Armschenkel - wie sie beim Stand der Technik notwendig sind - entfallen können. Durch die zusätzliche Federbeaufschlagung der Tragstrebe wird erfindungsgemäß eine Verbesserung der Raststabilität zwischen den beiden Haltearmschenkeln erzielt.

Bevorzugte Ausführungsformen sowie weitere Merkmale, Einzelheiten und Vorteile der Erfindung sind den Unteransprüchen bzw. der nachfolgenden Beschreibung entnehmbar, in der Ausführungsbeispiele des Erfindungsgegenstandes anhand der beigefügten Zeichnungen näher erläutert werden. Es zeigen:
- Fig. 1: einen vertikalen Längsschnitt durch das Schwenkgelenk eines Haltearms in einer ersten Ausführungsform,
- Fig. 2: eine Draufsicht auf ein Schwenkgelenk in einer zweiten Ausführungsform, und
- Fig. 3: eine gemäß Linie III-III nach Fig. 2 geschnittene Ansicht des Schwenkgelenks.

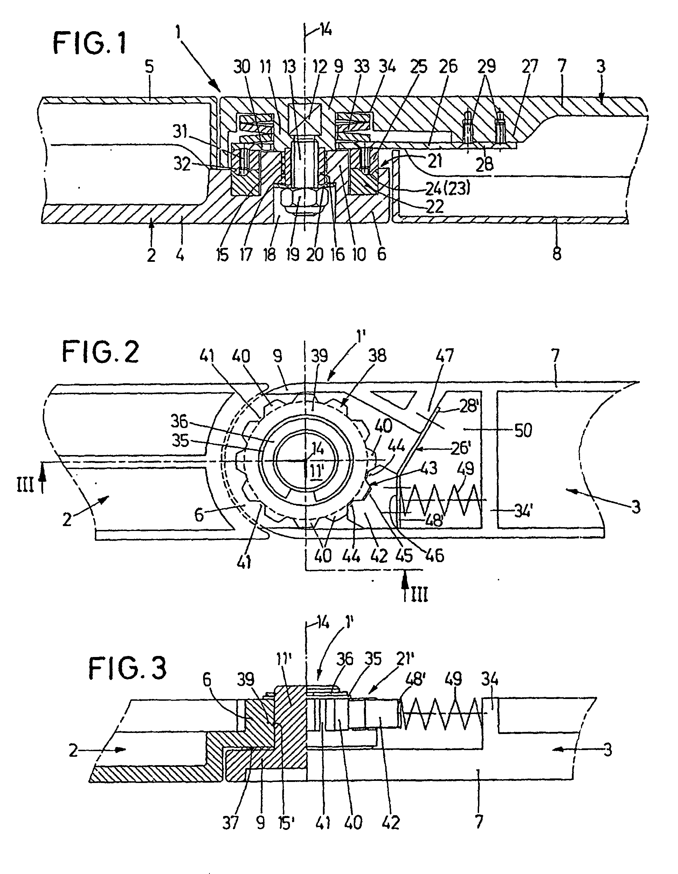

Bei der in Fig. 1 gezeigten Ausführungsform verbindet das als Ganzes mit 1 bezeichnete Schwenkgelenk die beiden Armschenkel 2, 3 eines Haltearmes für einen Lkw-Außenspiegel. Der in Fig. 1 links dargestellte Armschenkel 2 besteht dabei aus einem unten liegenden, tragenden Druckgußteil 4, das zur Lkw-Karosserie führt. Das Teil 4 ist durch eine Blende 5 abgedeckt, die das Ende 6 zur Ausbildung des Schwenkgelenks 1 frei läßt.

Der bezogen auf Fig. 1 nach rechts laufende Armschenkel 3 weist ein oben liegendes, tragendes Druckgußteil 7 auf, das an seinem nicht gezeigten Ende den Außenspiegel trägt. Auf die Unterseite des Druckgußteils 7 ist wiederum eine Blende 8 aufgesetzt, die das Ende 9 des Armschenkels 3 frei läßt.

An diesem Ende 9 ist eine Art Achsstummel 11 einstückig angeformt, in dem das als Vierkantblock 12 ausgebildete Ende eines Gewindebolzens 13 eingegossen und damit drehfest verbunden ist. Der Achsstummel 11 ist mit dem Gewindebolzen 13 koaxial angeordnet, der die Schwenkachse 14 des Schwenkgelenks 1 definiert.

Zur Kooperation mit dem Gewindebolzen 13 weist das mit dem oben liegenden Ende 9 des Armschenkels 3 überlappende, unten liegende Ende 6 des Armschenkels 2 einen einstückig angeformten Hülsenansatz 10 auf, dessen zentrale Bohrung 15 im Durchmesser so bemessen ist, daß eine Abstandshalterhülse 16 und darauf eine Gleithülse 17 zwischen Gewindebolzen 13 und Bohrung 15 Platz finden. An die Bohrung 15 schließt sich nach unten eine im Durchmesser erweiterte Montagebohrung 18 an, in der der Gewindebolzen 13 endet. Durch Aufschrauben einer Mutter 19 unter Zwischenlage einer Federscheibe 20 können die beiden Armschenkel 2, 3 spielfrei in Richtung der Schwenkachse 14, jedoch schwenkbar um diese miteinander verbunden werden. Dabei stoßen die Stirnseiten des Achsstummels 11 und des Hülsenansatzes 10 aneinander, werden jedoch aufgrund der Abstandshalterhülse 16 und der Feder-Beilagscheibe 20 nicht so fest miteinander verschraubt, daß ein Verschwenken unmöglich wird.

Das Schwenkgelenk 1 ist mit Hilfe einer als Ganzes mit 21 bezeichneten Rasteinrichtung zumindest in der in Fig. 1 gezeigten gestreckten Grundstellung verrastbar. Diese Rasteinrichtung 21 weist als erstes Rastelement einen den Armschenkel 2 zugeordneten Rastring 22 auf, der drehfest in einer nach oben offenen Ringnut 23 im Ende 6 des Armschenkels 2 festgelegt ist. Der Rastring weist mehrere über den Umfang seiner oben liegenden Stirnseite verteilte Rastnuten 24 auf, die sowohl in Umfangsrichtung als Radialrichtung (wie in Fig. 1 erkennbar) ein trapezförmiges Profil zeigen.

Mit dem Rastring 2 kooperiert ein Gegenrastring 25, der dem oberen Armschenkel 3 zugeordnet ist. Der Gegenrastring 25 ist an einer Tragstrebe 26 aufgehängt, die parallel zur Längsrichtung des oberen Armschenkels 3 und rechtwinklig zur Schwenkachse 14 zu einem vor dem Ende 9 des Armschenkels 3 angeordneten Lagerbock 27 führt. Die Tragstrebe 26 ist als blattfederartiges Blechstanzteil ausgebildet, dessen Schaft mit seinem festen Ende 28 mit Hilfe von Fixierschraube 29 am Lagerbock 27 festgelegt ist. Das freie Ende 48 der Tragstrebe 26 ist als einstückig an den Schaft 28 angeformter Verankerungsring 30 ausgebildet, dessen Kontur im wesentlichen der Kontur des Gegenrastringes 25 in Draufsicht entspricht. Mittels weiterer Fixierschrauben 31 ist der Gegenrastring 25 am Verankerungsring 30 der Tragstrebe 26 festgelegt.

Wie aus Fig. 1 deutlich wird, weist der Gegenrastring 25 an seiner nach unten weisenden Stirnseite Rastnasen 32 auf, die mit den Rastnuten 24 komplementäre Konturen zeigen. Durch die blattfederartige Tragstrebe 26 wird der Eingriff der Rastnasen 32 in den Rastnuten 24 gesichert, was durch ein auf den Achsstummel 11 aufgefädeltes Tellerfederpaket 33 noch unterstützt wird. Dieses liegt zwischen der dem Gegenrastring 25 abgewandten Rückseite des Verankerungsrings 30 und einem Widerlager 34 am Ende 9 des Armschenkels 3.

Wie ferner aus Fig. 1 erkennbar ist, ist das Schwenkgelenk 1 vollständig in die Querschnittskontur der Armschenkel 2, 3 integriert, da es weder nach oben, nach unten, noch zur Seite über die Außenseiten der Armschenkel 2, 3 hinaus steht.

Zur Funktion des Schwenkgelenks 1 mit axialem Rasteingriff ist kurz festzuhalten, daß bei Ausübung eines Drehmomentes auf den Armschenkel 3 dieses über die Tragstrebe 26 auf den Gegenrastring 25 übertragen, wodurch dieser mit seinen Rastnasen 32 aus den Rastnuten 24 des Rastringes 22 gegen die Federbeaufschlagung durch die Tragstrebe 26 und das Tellerfedernpaket 33 nach oben ausgehoben und der Armschenkel 3 gegenüber dem Armschenkel 2 verschwenkbar wird. Dabei erfolgt keine Verlagerung des Armschenkels 2 relativ zum Armschenkel 3 in Richtung der Schwenkachse 14. Der Erfindungsgegenstand zielt also auf eine spielfreie, flache und sehr kompakte Schwenkverrastung in einem Haltearm für Kraftfahrzeug-Außenspiegel ab. Durch die Anordnung einer Vielzahl von äquidistant liegenden Rastnuten 24 und Rastnasen 32 am Rastring 22 bzw. Gegenrastring 25 ist im übrigen eine stufenweise Verrastung des Schwenkgelenks 1 erreichbar.

Bei der in Fig. 2 und 3 gezeigten Ausführungsform ist eine Rasteinrichtung 21' vorgesehen, bei der mit einem radialen Rasteingriff gearbeitet wird. Die diesbezüglichen Unterschiede zu der in Fig. 1 gezeigten Ausführungsform werden im folgenden noch näher erläutert. Zur Vermeidung von Wiederholungen wird jedoch darauf hingewiesen, daß das Schwenkgelenk 1' der Ausführungsform gemäß den Figuren 2 und 3 genauso zwischen zwei Armschenkeln 2, 3 eines Spiegel-Haltearms vorgesehen ist. Insofern werden bei beiden Ausführungsformen übereinstimmende Bauteile mit identischen Bezugszeichen versehen und bedürfen keiner nochmaligen Erläuterung.

Die Schwenklagerung erfolgt bei der Ausführungsform gemäß Fig. 2 und 3 durch einen Achsstummel 11', der eine Lagerbohrung 15' im Ende 6 des Arms 2 vollständig durchsetzt. Auf das über die Lagerbohrung 15' überstehende Ende des Achsstummels 11' ist unter Zwischenfügung einer Federscheibe 35 ein Sprengring 36 geschoben, womit die beiden Armschenkel 2, 3 im Bereich des Schwenkgelenks 1 praktisch spielfrei und gelenkig miteinander verbunden sind. Zur Verminderung der Reibung zwischen den beiden Lagerpartnern ist ein auf den Achsstummel 11' aufgefädelter Gleitscheibenring 37 zwischen Unter- und Oberseite der Armschenkel 2, 3 vorgesehen.

Als Rastelement am Armschenkel 2 fungiert eine Rastzahnreihe 38, die sich über die Umfangsfläche eines die Lagerbohrung 15' bildenden Lagerkörpers 39 am Ende 6 des Armschenkels 2 erstreckt. Diese Rastzahnreihe weist im Profil trapezförmige Rastzähne 40 auf, die zwischen sich Rastausnehmungen 41 freilassen.

Als Gegenrastelement dient ein Gegenrastblock 42, der mit einer zur Rastzahnreihe 38 komplementären Stirnverzahnung 43 versehen ist, die zwei Rastzähne 44 mit einer dazwischen liegenden Rastausnehmung 45 aufweist. An der der Stirnverzahnung 43 abgewandten Rückseite 46 ist wiederum eine blattfederartige Tragstrebe 26' mit ihrem freien Ende festgelegt, deren festes Ende 28' an einem Vorsprung 47 der Innenkontur des Armschenkels 3 befestigt ist. Die Befestigung zwischen Tragstrebe 26' und Gegenrastblock 42 bzw. Vorsprung 47 kann analog Fig. 1 durch Verschraubungen, aber auch durch Vernietungen, entsprechende Klemmungen o. ä. erfolgen. Schließlich ist darauf hinzuweisen, daß beide Tragstreben 26, 26' der Ausführungsformen gemäß Fig. 1 bzw. 2 und 3 auch gleichzeitig das Gegenrastprofil selbst bilden können. So kann z. B. die Tragstrebe 26' in Fortsetzung ihres freien Endes entsprechend der Kontur des Gegenrastblockes 42 ausgebildet sein, wodurch letzterer integral mit der Tragstrebe gebildet wäre.

Wie aus Fig. 2 und 3 deutlich wird, ist die Tragstrebe 26' zwischen ihrem abgekröpften freien Ende 48 und einem Widerlager 34' im Armschenkel 3 durch eine Schraubendruckfeder 49 zusätzlich abgestützt. Der Gegenrastblock 42 mit Tragstrebe 26' und Schraubendruckfeder 49 ist dabei in einer fachartigen Ausnehmung 50 im Armschenkel 3 angeordnet.

Wiederum ist zur Funktion der Rasteinrichtung 21' kurz festzuhalten, daß z. B. die in Fig. 2 und 3 gezeigte gestreckte Stellung der beiden Armschenkel 2, 3 bei Aufbringen eines Drehmomentes auf den Armschenkel 3 aufgehoben wird, in dem dieses Drehmoment über die Tragstrebe 26' auf den Gegenrastblock 42 übertragen wird. Dieser wird entsprechend mit seiner Stirnverzahnung 43 aus der Rastzahnreihe 38 gegen die Federbeaufschlagung durch die Tragstrebe 26' und die Schraubendruckfeder 49 ausgehoben. Es kann folglich eine Schwenkbewegung bis zum Eingriff von Stimverzahnung 43 und Rastzahnreihe 38 um eine oder mehrere Zähne versetzt stattfinden. Wiederum ist erkennbar, daß die Tragstrebe 26' für eine vom Armschenkel 3 unabhängige Verschiebbarkeit des Gegenrastblockes 42 sorgt, so daß mit der Ausrückbewegung der Verrastung keine Lageänderung der beiden Armschenkel 2, 3 zueinander einhergeht.

Auch bei der zweiten Ausführungsform bleibt der gesamte Rastmechanismus innerhalb der Querschnittskontur der Armschenkel 2, 3, wie aus einer Zusammenschau der Fig. 2 und 3 deutlich wird.

## Patentansprüche

1. Haltearm für einen Kraftfahrzeug-Außenspiegel mit einem integrierten, in mindestens einer Stellung verrastbaren Schwenkgelenk (1) zwischen zwei Armschenkeln (2, 3), dessen Schwenkachse (14) quer zur Längsrichtung der Armschenkel (2, 3) angeordnet ist, wobei
- an einem Armschenkel (2) drehfest ein Rastelement (22, 38) angeordnet ist,
- am anderen Armschenkel (3) ein damit kooperierendes, in Eingrifisrichtung mit dem Rastelement (22, 38) federbeaufschlagtes Gegenrastelement (25, 42) angeordnet ist, das ebenfalls drehfest, jedoch in Eingriffsrichtung relativ zum Armschenkel (3) verschiebbar ist, und
- das Gegenrastelement (25,42) am freien Ende (48) einer blattfederartigen Tragstrebe (26, 26') aufgehängt ist, die mit ihrem festen Ende (28, 28') am zugeordneten Armschenkel (3) festgelegt ist, **dadurch gekennzeichnet, daß** die Tragstrebe (26, 26') in Eingriffsrichtung des Gegenrastelements (25, 42) durch eine Druckfeder (33,49) zusätzlich federbeaufschlagt ist.

2. Haltearm nach Anspruch 1, **dadurch gekennzeichnet, daß** in gestreckter Stellung der beiden Armschenkel (2, 3) das Schwenkgelenk (1) im wesentlichen vollständig in die Querschnittskontur der Armschenkel (2, 3) integriert ist.

3. Haltearm nach Anspruch 1 oder 2, **dadurch gekennzeichnet, daß** bei einer Verrastung mit in Axialrichtung des Schwenkgelenks (1) liegender Eingriffsrichtung ein Rastring (22) am einen Armschenkel (2) mit einem Gegenrastring (25) an der Tragstrebe (26) kooperiert, wobei Rastring (22) und Gegenrastring (25) mit ineinandergreifenden Stirnverzahnungen (24, 32) versehen und konzentrisch um die Schwenkachse (14) angeordnet sind.

4. Haltearm nach Anspruch 3, **dadurch gekennzeichnet, daß** die Tragstrebe (26) einen einstückig angeformten Verankerungsring (30) aufweist, an dem der Gegenrastring (25) festgelegt ist

5. Haltearm nach Anspruch 3 oder 4, **dadurch gekennzeichnet, daß** zwischen Gegenrastring (25) bzw. Verankerungsring (30) und einem Widerlager (34) am Armschenkel (3) ein Tellerfedernpaket (33) zur zusätzlichen Federbeaufschlagung des Gegenrastrings (25) eingesetzt ist

6. Haltearm nach Anspruch 1 oder 2, **dadurch gekennzeichnet, daß** bei einer Verrastung mit in Radialrichtung des Schwenkgelenks (1) liegender Eingriffsrichtung ein blockartiges Gegenrastelement (42) an der Tragstrebe (26') am einen Armschenkel (3) vorgesehen ist, das in eine radfial nach außen weisende Rastzahnreihe (38) am anderen Armschenkel (2) eingreift.

7. Haltearm nach Anspruch 6, **dadurch gekennzeichnet, daß** die Rastzahnreihe (38) an der Umfangsfläche eines die Lagerbohrung (15') für den Schwenklagerbolzen (11') bildenden Lagerkörpers (39) am Armschenkel (2) angeordnet ist.

8. Haltearm nach Anspruch 6 oder 7, **dadurch gekennzeichnet, daß** das blockartige Gegenrastelement (42) mit seiner Tragstrebe (26') in einer fachartigen Ausnehmung (50) im Armschenkel (3) angeordnet ist.

9. Haltearm nach einem der Ansprüche 1 bis 8, **dadurch gekennzeichnet, daß** Rastelement (22, 38) und Gegenrastelement (25, 42) einander komplementäre keilförmige Rastprofile (24, 32, 40, 41, 44, 45) aufweisen.

## Claims

1. Holding arm for an external motor vehicle mirror with integrated swivel articulation (1) capable of snapping in in at least one position, between two arm segments (2, 3) the swivel axis (14) of which is at a right angle to the longitudinal direction of the arm segments (2, 3) whereby
- a snap-in element (22, 38) is provided non-rotatably on an arm segment (2),
- a counter-snap-in element (25, 42) subject to the force of a spring pushing it in the direction of engagement with the snap-in element (22, 38) is mounted on the other arm segment (3) and cooperates with it, said counter-snap-in element being also non-rotatable but capable of shifting in the direction of engagement relative to the arm segment (3) and
- the counter-snap-in element (25, 42) is suspended on the free end (48) of a leaf spring-like bearing brace (26, 26') which is attached at its fixed end (28, 28') to its associated arm segment (3), **characterized in that** the bearing brace (26, 26') is subjected to additional spring force in the direction of engagement of the counter-snap-in element (25, 42) by a compression spring (33, 49).

2. Holding arm as in claim 1, **characterized in that** the swiveling articulation (1) is substantially entirely integrated into the cross-sectional contour of the arm segment (2, 3) when the two arm segments (2, 3) are in extended position.

3. Holding arm as in claim 1 or 2, **characterized in that** when the swiveling articulation (1) cooperates with a counter-snap-in ring (25) on the bearing brace (26) when snap-in connection takes place in axial direction, whereby the snap-in ring (22) and the counter-snap-in ring (25) are provided with interlocking frontal teeth (24, 32) and are concentric around the swivel axis (14).

4. Holding arm as in claim 3, **characterized in that** the bearing brace (26) is made in one piece with an anchoring ring (30) on which the counter-snap-in ring (25) is fixed.

5. Holding arm as in claim 3 or 4, **characterized in that** a Belleville spring package (33) is used between the counter-snap-in ring (25) or the anchoring ring (30) and a counterbearing (34) on the arm segment (3) to ensure application of additional spring force on the counter-snap-in ring (25).

6. Holding arm as in claim 1 or 2, **characterized in that** when a snap-in connection is established with the direction of engagement in radial direction of the swiveling articulation (1), a block-like counter-snap-in element (42) which engages a row of snap-in teeth (38) pointing radially in an outward direction on the one arm segment (2) is provided on the bearing brace (26') on the other arm segment (3).

7. Holding arm as in claim 6, **characterized in that** the row of snap-in teeth (38) is located on the circumferential surface of a bearing element (39) on the arm segment (2) which constitutes the bearing bore (15') of the swivel bearing bolt (11').

8. Holding arm as in claim 6 or 7, **characterized in that** the block-like counter-snap-in element (42) is installed with its bearing brace (26') in a compartment-like recess (50) in the arm segment (3).

9. Holding arm as in one of the claims 1 to 8, **characterized in that** the snap-in element (22, 38) and the counter-snap-in element (25, 42) have wedge-shaped snap-in profiles (24, 32, 40, 41, 44, 45) which complement each other.

## Revendications

1. Bras de support pour rétroviseur extérieur de véhicule automobile comportant une articulation orientable intégrée (1) encliquetable dans au moins une position, située entre deux branches de bras (2, 3) dont l'axe de pivotement (14) est disposé transversalement à la direction longitudinale des branches de bras (2, 3), et dans lequel :
- un élément d'arrêt (22, 38) est disposé de manière fixe en rotation sur une branche de bras (2),
- un contre-élément d'arrêt (25, 42) coopérant avec ce dernier et soumis à la force d'un ressort dans la direction d'engrènement avec l'élément d'arrêt (22, 38), qui est mobile dans la direction d'engrènement par rapport à la branche de bras (3) tout en étant également fixe en rotation, est disposé sur l'autre branche de bras (3), et
- le contre-élément d'arrêt (25, 42) est accroché à l'extrémité libre (48) d'un montant porteur (26, 26') en forme de ressort à lames qui est fixé par son extrémité fixe (28, 28') à la branche de bras associée (3),
**caractérisé en ce que** le montant porteur (26, 26') est soumis de manière complémentaire à la force d'un ressort dans la direction d'engrènement du contre-élément d'arrêt (25, 42) au moyen d'un ressort de pression (33, 49).

2. Bras de support selon la revendication 1, **caractérisé en ce que**, dans la position allongée des deux branches de bras (2, 3), l'articulation orientable (1) est sensiblement complètement intégrée dans le profil transversal des branches de bras (2, 3).

3. Bras de support selon la revendication 1 ou 2, **caractérisé en ce que**, dans le cas d'un dispositif d'encliquetage à direction d'engrènement située dans la direction axiale de l'articulation orientable (1), un anneau d'arrêt (22) situé sur une branche de bras (2) coopère avec un contre-anneau d'arrêt (25) situé sur le montant porteur (26), l'anneau d'arrêt (22) et le contre-anneau d'arrêt (25) étant munis de crantages frontaux (24, 32) s'engrenant l'un dans l'autre et étant disposés de manière concentrique autour de l'axe de pivotement (14).

4. Bras de support selon la revendication 3, **caractérisé en ce que** le montant porteur (26) comporte un anneau d'ancrage (30) formé en continuité d'une seule pièce sur lequel le contre-anneau d'arrêt (25) est fixé

5. Bras de support selon la revendication 3 ou 4, **caractérisé en ce qu'**un groupe de ressorts à disques (33) est inséré entre le contre-anneau d'arrêt (25) ou l'anneau d'ancrage (30) et une butée (34) située sur la branche de bras (3) pour soumettre le contre-anneau d'arrêt (25) à une pression de ressort supplémentaire.

6. Bras de support selon la revendication 1 ou 2, **caractérisé en ce que**, dans le cas d'un dispositif d'encliquetage à direction d'engrènement située dans la direction radiale de l'articulation orientable (1), il est prévu un contre-élément d'arrêt (42) en forme de bloc placé sur le montant porteur (26') situé sur une branche de bras (3), lequel contre-élément s'engrène dans une série de dents d'arrêt (38) dirigées radialement vers l'extérieur et situées sur l'autre branche de bras (2).

7. Bras de support selon la revendication 6, **caractérisé en ce que** la série de dents d'arrêt (38) est disposée sur la surface circonférentielle d'un corps de montage (39) qui est situé sur la branche de bras (2) et qui forme le trou de montage (15') destiné au boulon de montage et de pivotement (11').

8. Bras de support selon la revendication 6 ou 7, **caractérisé en ce que** le contre-élément d'arrêt en forme de bloc (42) et son montant porteur (26') sont disposés dans un évidement en forme de case (50) situé dans la branche de bras (3).

9. Bras de support selon l'une des revendications 1 à 8, **caractérisé en ce que** l'élément d'arrêt (22, 38) et le contre-élément d'arrêt (25, 42) présentent des profils d'arrêt cunéiformes (24, 32, 40, 41, 44, 45) complémentaires les uns par rapport aux autres.
